# EUROPÄISCHE PATENTSCHRIFT

(11) **EP 1 445 162 B1**
(45) Veröffentlichungstag und Bekanntmachung des Hinweises auf die Patenterteilung: **30.07.2008**
(21) Anmeldenummer: 03023283.9
(22) Anmeldetag: 15.10.2003
(51) Int. Cl.: B60T 17/22

(54) **Verfahren zur Sicherstellung des Fahrzeugstillstandes bzw. der Feststellbremsfunktion an einem Fahrzeug mit einer dezentralen elektromechanischen Bremskraftanlage**
Method for ensuring the immobilizing of the vehicle by means of a vehicle electromechanical decentralized parking brake system
Procedé pour assurer l'immobilisation de une voiture par un systeme decentraliseé de frein de parc électromécanique

(30) Priorität: 06.02.2003 DE 10304834
(43) Veröffentlichungstag der Anmeldung: 11.08.2004
(73) Patentinhaber: ROBERT BOSCH GMBH, 70442 Stuttgart (DE)
(72) Erfinder: Blattert, Dieter, 74366 Kirchheim/Neckar (DE)

(56) Entgegenhaltungen:
- EP-B- 0 825 081
- WO-A-00/03904
- DE-A- 19 634 567
- DE-A- 19 861 144
- DE-A- 19 905 663
- DE-C- 10 006 656

## Beschreibung

Die vorliegende Erfindung bezieht sich auf eine Steuereinheit für ein Fahrzeug zur Sicherstellung des Fahrzeugstillstandes bzw. der Feststellbremsfunktion an einem Fahrzeug mit einer dezentralen elektromechanischen Bremskraftanlage.

### Stand der Technik

Alternativ zu hydraulisch und pneumatisch betätigten Bremsen werden in Fahrzeugen auch elektromechanische Bremsen (EMB) verwendet. Die grundlegende Idee der elektromechanischen Bremsen besteht darin, dass auf die hydraulische oder pneumatische Kraftübertragung teilweise oder ganz verzichtet wird. Statt dessen erzeugen direkt in die Radbremsen integrierte Elektromotoren die Bremskraft dort, wo sie gebraucht wird. Die zum Bremsen erforderliche Energie wird dabei ausschließlich vom Bordnetz des Fahrzeugs bereitgestellt. Bei den elektromechanischen Bremsen werden die Bremsbeläge durch Elektromotoren und Bewegungsgetriebe elektronisch gesteuert an die Bremsscheibe gepresst. Durch das dezentrale System der elektromechanischen Bremsen kann jede Bremse oder jede Achse eines Fahrzeugs getrennt angesteuert werden. Der Ausfall einer Bremse kann somit durch die anderen Bremsen kompensiert werden. Zur Signal- und Energieübertragung dienen ausschließlich elektrische Leitungen. Dies erleichtert die Fahrzeugmontage und die Inbetriebnahme der Bremsanlage.

Eine solche elektromechanische Bremse ist aus der DE 196 34 567 A1 bekannt. Das dort offenbarte Bremssystem weist eine dezentrale Struktur auf, mit Steuermödulen zur Einstellung der Bremskraft an den Rädern des Fahrzeugs, mit einem Steuermodul zur Ermittlung des Fahrerwunsches, mit einem Kommunikationssystem zur Verbindung der Module miteinander sowie mit wenigstens zwei voneinander unabhängigen Bordnetzen zu Energieversorgung der Module bzw. Elemente.

Aus der DE 198 61 144 A1 ist neben der Einbeziehung der Betriebsbremse des Fahrzeugs in ein elektromechanisches Bremssystem die Einbeziehung der Feststellbremse bekannt. Bei diesem Stand der Technik wird aus einem Wert für den Betriebsbremswunsch und aus einem Wert für den Feststellbremswunsch ein Mittelwert gebildet, der für die Steuerung der Radbremsen herangezogen wird.

Bei einer Abkühlung der Radbremse kommt es zu einer Reduzierung der auf die Radbremskomponenten aufgebrachten Zuspannkraft. Dies lässt sich durch das Temperaturverhalten der Bremsscheiben und der Bremsbeläge erklären. Die sich aufgrund der Temperaturreduzierung an den Bremsscheiben und den Bremsbelägen einstellende Dickendifferenz muss, um einer Reduzierung der Zuspannkraft entgegenwirken zu können, von der Gesamtsteifigkeit des Zuspanngebildes ausgeglichen werden.

Bei der elektromechanischen Bremse kann in einfacher Weise an jedem Fahrzeugrad bzw. an jeder Fahrzeugachse die Feststellbremsfunktion dargestellt werden. Die Feststellbremskraft wird dabei von einem elektromechanischen Bremsaktuator mit einer kurzen Übertragungsstrecke erzeugt, so dass die Feststellbremse mechanisch verriegelt wird. Nachteilig ist dabei, dass der elektromechanische Bremsaktuator ein mechanisch steifes Gebilde ist, und sich folglich bei einer Abkühlung der Radbremse eine Reduzierung der Zuspannkraft einstellt.

Die EP 0 825 081 B1 offenbart, dass bei einem Bremssystem mit elektromechanisch betätigbaren Feststellbremsen ein Spannkraftverlust bei der Bremsscheibenabkühlung bei Bremssätteln, bei denen Betriebs- und Feststellbremse auf eine gemeinsame Bremsscheibe wirken, kompensiert wird. Ferner ist bekannt, die Temperatur an den Bremsscheiben zu errechnen und daraus die erforderliche Zuspannkraft für ein sicheres Halten des Fahrzeugs auch bei abkühlenden Bremsscheiben zu gewährleisten.

Nachteilig bei der Kompensierung des Zuspannverlustes der Feststellbremse nach der EP 0 825 081 B1 ist, dass während der selbsttätigen Kompensierung des Feststellbremskraftverlustes durch den elektromechanischen Feststellbremsaktuator als Folge des Abkühlvorgangs der Radbremsen keine Sicherstellung des Fahrzeugstillstands gewährleistet ist. Wird ein Fahrzeug mit heißen Bremsen an einer Steigung oder einem Gefälle abgestellt, kompensiert die Feststellbremse ihren eigenen Feststellbremskraftverlust infolge der Abkühlung der Bremsscheiben und Bremssättel. Während der Kompensierung der Zuspannkraft ist keine ausreichende Sicherstellung des Fahrzeugstillstands gewährleistet, so dass es zu einem Losrollen des Fahrzeugs kommen kann.

Ferner können Betriebszustände auftreten, welche einer weiteren Erhöhung der Zuspannkraft der Feststellbremse entgegenstehen. Dies könnte eine nicht ausreichende Energieversorgung der Bremsaktuatoren sein oder temporär auftretende Übertemperaturen der Bremsaktuatoren aufgrund einer Nachheizphase der Feststellbremse. Ebenso kann es dazu kommen, dass sich die Zuspannkraft des Bremsaktuators durch Fehler in den mechanischen oder elektronischen Komponenten der Feststellbremse nicht erhöhen lässt.

Ein Ziel der Erfindung ist es, eine Sicherstellung des Fahrzeugstillstandes bzw. der Feststellbremsfunktion an einem Fahrzeug mit einer dezentralen elektromechanischen Bremskraftanlage auf einfache und sichere Art und Weise zu gewährleisten, wenn die Feststellbremse keine oder aufgrund eines Feststellbremskraftverlustes vorübergehend keine ausreichend große Zuspannkraft zur Sicherstellung des Fahrzeugstillstandes bzw. der Feststellbremsfunktion bereitstellt.

Dieses Ziel wird erfindungsgemäß durch eine Steuereinheit mit den Merkmalen des Patentanspruchs 1 erreicht.

Durch die erfindungsgemäße Maßnahme, eine Steuereinheit für ein Fahrzeug zur Sicherstellung des Fahrzeugstillstandes bzw. der Feststellbremsfunktion an einem Fahrzeug mit einer dezentralen elektromechanischen Bremskraftanlage zu schaffen, wobei bei dem Vorliegen einer für die Sicherstellung des Fahrzeugstillstandes bzw. der Feststellbremsfunktion nicht ausreichenden Zuspannkraft an einer Feststellbremse die Sicherstellung des Fahrzeugstillstandes bzw. der Feststellbremsfunktion durch Zuspannung einer nicht mit der Feststellbremskraft beaufschlagten elektromechanischen Bremseinrichtung erfolgt, kann die Sicherstellung des Fahrzeugstillstandes bzw. der Feststellbremsfunktion auf einfache und sichere Art und Weise gewährleistet werden.

### Vorteil der Erfindung

Bei dezentralen Bremssystemen mit elektromechanischen Bremskomponenten kann bei Feststellung einer nicht ausreichenden Feststellbremskraft ein Signal von der Feststellbremse über ein Bussystem zu einer anderer Bremse bzw. Bremsachse des Fahrzeugs übermittelt werden, um dort eine Zuspannung der Bremse zu erwirken und somit eine Sicherstellung des Fahrzeugstillstandes zu gewährleisten.
So kann beispielsweise durch einen mechanischen oder elektronischen Defekt an der Feststellbremse eine zur Sicherstellung des Fahrzeugs nicht ausreichend große Zuspannkraft vorliegen. Wird dies festgestellt, übermittelt ein Bussystem, welches alle Bremskomponenten eines Fahrzeugs miteinander verbindet, ein Signal zu einem Steuergerät einer nicht mit der Feststellbremskraft beaufschlagten Bremseinrichtung und bewirkt dort ein Zuspannen der Bremse, so dass das Fahrzeug gegen ein Losrollen gesichert ist.

Durch die erfindungsgemäße Steuereinheit für ein Fahrzeug kann die Sicherstellung des Fahrzeugstillstands bzw. der Feststellbremsfunktion gewährleistet werden, während ein elektromechanischer Feststellbremsaktuator selbsttätig einen aufgetretenen Feststellbremskraftverlust kompensiert. D.h. während einer Erhöhung der Zuspannkraft der Feststellbremse infolge eines Bremskraftverlustes erfolgt die Zuspannung an einer nicht mit der Feststellbremskraft beaufschlagten elektromechanischen Bremseinrichtung.

Vorteilhaft ist, dass die nicht mit der Feststellbremskraft beaufschlagte Bremseinrichtung beim Vorliegen einer zur Sicherstellung des Fahrzeugstillstandes nicht ausreichenden Zuspannkraft an der Feststellbremse mit einer Zuspannkraft beaufschlagt wird, die der zur Sicherstellung des Fahrzeugstillstandes notwendigen Zuspannkraft der Feststellbremse entspricht. Dies gewährleistet, dass das Fahrzeug durch die Bremseinrichtung sicher gehalten wird. Die Zuspannkraft muss zumindest so groß gewählt werden, dass ein Stillstand des Fahrzeugs erreicht wird.

Bei dem Verfahren, welches in der Steuereinheit zur Sicherstellung des Fahrzeugstillstands bzw. der Feststellbremsfunktion durchgeführt wird, ist von Vorteil, dass in einem ersten Schritt der Stillstand des Fahrzeuges ermittelt wird sowie überprüft wird, ob an der Feststellbremse eine zur Sicherung des Fahrzeugstillstandes ausreichende Zuspannkraft vorliegt. Hierbei spielt es keine Rolle, ob der Fahrzeugmotor läuft oder abgestellt ist. Entscheidend ist die Feststellung des Stillstands des Fahrzeugs. Durch die Überprüfung der Zuspannkraft der Feststellbremse kann festgestellt werden, ob zuwenig Zuspannkraft durch die Feststellbremsen ausgeübt wird oder nicht.

Vorteilhaft ist es weiterhin, dass in einem zweiten Schritt die Zuspannung an einer nicht mit der Feststellbremskraft beaufschlagten Bremseinrichtung erfolgt, wenn ein Fahrzeugstillstand ermittelt worden ist und an der Feststellbremse eine zur Sicherstellung des Fahrzeugstillstandes nicht ausreichende Zuspannkraft vorliegt und/oder eine an der Feststellbremse gemessene Temperatur einen vorgegebenen Grenzwert überschreitet.
Es gibt zwei unterschiedliche Fälle, bei denen eine Zuspannung an einer nicht mit der Feststellbremskraft beaufschlagten Bremseinrichtung erfolgt. Im ersten Fall liegt ein Fahrzeugstillstand vor und an der Feststellbremse liegt eine zur Sicherstellung des Fahrzeugstillstandes unzureichende Zuspannkraft vor. Somit wird ein Signal an eine oder mehrere Bremsen des Fahrzeugs, die im Normalfall nicht mit der Feststellbremskraft beaufschlagt sind, gesandt, welches ein Zuspannen dieser Bremsen nach sich zieht.

Bei dem zweiten möglichen Fall liegt ein Fahrzeugstillstand vor und eine an der Feststellbremse gemessene Temperatur überschreitet einen vorgegebenen Grenzwert. Die Temperatur wird in der Regel an den Bremsscheiben oder den Bremssätteln gemessen. Liegt die gemessene Temperatur über dem zuvor bestimmten kritischen Wert, kommt es bei dem Abkühlvorgang zu einer Dickenveränderung der Bremsscheiben und der Bremsbeläge, so dass die angelegte Zuspannkraft dann nicht mehr ausreicht, um einen sicheren Fahrzeugstillstand zu gewährleisten. Auch in diesem Fall wird ein Signal an eine oder mehrere Bremsen des Fahrzeugs; die im Normalfall nicht mit der Feststellbremskraft beaufschlagt sind, gesandt, welches ein Zuspannen dieser Bremsen nach sich zieht.

Ferner ist es von Vorteil, dass in einem dritten Schritt die Zuspannung der mit der Feststellbremskraft beaufschlagten Bremseinrichtung erhöht wird, bis eine zur Sicherstellung des Fahrzeugstillstandes ausreichende Zuspannkraft an dieser erreicht ist und/oder die an der Feststellbremse gemessene Temperatur den vorgegebenen Grenzwert unterschreitet. Hierdurch wird erreicht, dass die Feststellbremse nach einer bestimmten Zeitdauer selber genug Zuspannkraft aufbringt, um einen sicheren Fahrzeugstillstand zu gewährleisten. Zweckmäßigerweise liegt eine ausreichend große Zuspannkraft an der Feststellbremse an, wenn die Kraft groß genug ist das Fahrzeug sicher zu halten und die Temperatur einen kritischen Wert unterschritten hat, so dass ein weiteres Abkühlen der Bremsscheiben bzw. der Bremsbeläge keine Dickenveränderung an diesen Komponenten mehr verursacht. Sobald die Zuspannkraft an der Feststellbremse ausreichend groß ist, um das Fahrzeug sicher zu halten, und die Bremsscheiben bzw. die Bremssättel eine Temperatur erreicht haben, die unter der kritischen Temperatur liegt, braucht die mit der Feststellbremskraft beaufschlagte Bremseinrichtung die Zuspannung nicht mehr zu erhöhen.

Ferner ist vorteilhaft, dass in einem vierten Schritt nach Erreichen einer zur Sicherstellung des Fahrzeugstillstandes ausreichenden Zuspannkraft an der Feststellbremse und/oder nach Unterschreiten des vorgegebenen Temperaturgrenzwerts an der Feststellbremse die Zuspannung an der nicht mit der Feststellbremskraft beaufschlagten Bremseinrichtung gelöst wird. Sobald die Feststellbremse selber genügend Zuspannkraft aufbringt, um einen sicheren Fahrzeugstillstand zu gewährleisten, und keine äußere Einflüsse einen Bremskraftverlust an der Feststellbremse verursachen können, kann die an der nicht mit der Feststellbremskraft beaufschlagten Bremseinrichtung gelöst werden. Dies kann durch ein Signal, welches von der Feststellbremsvorrichtung an die anderen Bremsen des Fahrzeugs übermittelt wird, erfolgen.

Ferner ist es von Vorteil, dass bei Nichterreichung einer zur Sicherstellung des Fahrzeugstillstandes ausreichenden Zuspannkraft an der Feststellbremse die Zuspannung an der nicht mit der Feststellbremskraft beaufschlagten Bremseinrichtung erst dann gelöst wird, wenn eine zur Sicherstellung des Fahrzeugstillstands ausreichende Zuspannung an der Betriebsbremse des Fahrzeugs vorliegt oder der Fahrzeugmotor eine ausreichende Kraft aufbringt, um einer unerwünschten Bewegung des Fahrzeugs entgegenzuwirken. Kann beispielsweise aus einem mechanischen oder elektronischen Defekt keine ausreichend große Zuspannkraft an der Feststellbremse aufgebracht werden, so darf die Zuspannung an der oder den nicht mit der Feststellbremskraft beaufschlagten Bremseinrichtung(en) erst dann gelöst werden, wenn das Fahrzeug aufgrund seiner Motorkraseiner ft oder Getriebekräfte einem ungewollten Losrollen des Fahrzeugs entgegenwirken kann. Wird das Fahrzeug nicht aus dem Stillstand bewegt, darf die Zuspannung an der oder den nicht mit der Feststellbremskraft beaufschlagten Bremseinrichtung(en) erst dann gelöst werden, wenn der Defekt an der Feststellbremse behoben ist und eine ausreichend große Zuspannkraft durch diese aufgebracht wird.

Der Einsatz von elektromechanischen Bremsen, die Teil eines dezentralen Bremssystems sind, eignet sich besonders gut für das oben beschriebene Verfahren. Vorteilhafterweise werden zur Sicherstellung der Zuspannung der Feststellbremse und/oder einer nicht mit der Feststellbremskraft beaufschlagten Bremseinrichtung die Bremsbeläge der Bremsen durch Elektromotoren und Bewegungsgetriebe an die entsprechenden Bremsscheiben gepresst. Die einzelnen Radeinheiten des Fahrzeugs sind zur Steuerung und Regelung der Stellglieder der Radbremsen, wie Feststellbremsen oder Betriebsbremsen, zweckmäßigerweise über ein oder mehrere Kommunikationssysteme, insbesondere Bussysteme, miteinander verbunden. Das Bremssystem des Fahrzeugs wird vorteilhafterweise von zumindest zwei Bordnetzen mit Energie versorgt, um eine zufriedenstellende Sicherheit und Verfügbarkeit des Bremssystems zu gewährleisten. In der Regel weist jede Radeinheit zwei Radbremsen auf. D.h. eine Feststellbremse besteht normalerweise aus zwei Radbremsen, wobei an jedem Rad eine Bremse vorgesehen ist.

Vorteilhafterweise wird die Temperatur der Feststellbremse an den Bremsbelägen und/oder an den Bremsscheiben der Feststellbremse gemessen.

Ferner ist vorteilhaft, dass die Steuerung der Bremsen durch wenigstens einen Mikrocomputer erfolgt.

Erfindungsgemäß ist zur Sicherstellung des Fahrzeugstillstandes bzw. der Feststellbremsfunktion an einem Fahrzeug mit einer dezentralen elektromechanischen Bremskraftanlage eine Steuereinheit im Fahrzeug vorgesehen, die einen Mikrocomputer oder eine andere geeignete Steuer- und/oder Rechnereinheit zur Steuerung der Bremsen gemäß dem oben beschriebenen erfindungsgemäßen Verfahren aufweist.

Im folgenden soll die Erfindung anhand eines Ausführungsbeispiels näher erläutert werden.

### Zeichnung

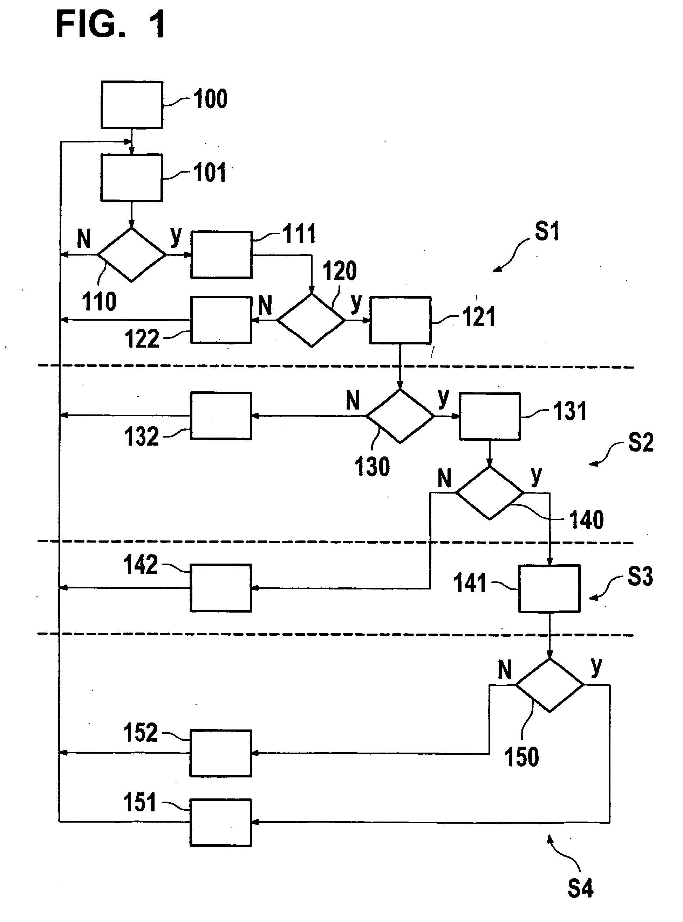

Figur 1 zeigt ein Flussdiagramm für den Ablauf einer Ausführungsform des erfindungsgemäßen Verfahrens und
Figur 2 eine schematische Ausführungsform einer erfindungsgemäßen Bremskraftanlage und einer erfindungsgemäßen Steuereinheit.

### Bevorzugte Ausführungsform

Das Flussdiagramm zum Ablauf einer Ausführungsform eines Verfahrens, welches in der erfindungsgemäßen Steuereinheit abläuft ist in vier Schritte S1, S2, S3 und S4 unterteilt. Bei jedem dieser Schritte S1, S2, S3, und S4 sind diverse Unterschritte vorgesehen.

Ausgangspunkt des Verfahrens ist der Unterschritt 100, in Unterschritt 101 wird eine Feststellbremsfunktion aktiviert. Bei einer ersten Abfrage 110 wird ermittelt, ob das Fahrzeug still steht. Falls sich das Fahrzeug noch bewegt (N), wird erneutdie Feststellbremsfunktion aktiviert (101). Falls ein Fahrzeugstillstand diagnostiziert wird (Y), wird das Verfahren fortgesetzt (111). Es wird eine Feststellbremsfunktion erfasst und ermittelt, ob die Feststellbremse selbsttätig verriegelt ist. Dies kann einerseits betätigt durch den Fahrer oder andererseits durch eine automatische Systemanforderung erfolgen. Aufgrund vorliegender Fahrzeugparameter kann ermittelt werden, ob die an den Radbremsen herrschende Bremskraft zur Gewährleistung eines Fahrzeugstillstands ausreicht. Hierzu wird insbesondere die Ist-Temperatur der Radbremsen an der Vorderachse oder der Hinterachse bestimmt. Desweiteren erfolgt eine Abfrage 120 darüber, ob die ermittelte Ist-Temperatur größer als ein vorgegebener Grenzwert ist. Falls sie kleiner ist (N), erfolgt Unterschritt 122. Hier wird eine Feststellbremsenanforderung an der für mit der Feststellbremskraft nicht beaufschlagten Achse durch eine elektromechanische Bremseinrichtung umgesetzt, die Bremseinrichtung wird mechanisch verriegelt und ihr Status wird weitergeleitet. Falls die Ist-Temperatur größer als der Grenzwert ist (Y), wird das Verfahren in Unterschritt 121 fortgesetzt, das Bremssystem wird aktiv gehalten.

Zu Beginn des Schrittes S2 wird überprüft, ob eine Bedingung 130 für einen Nachspannvorgang vorliegt. Hierzu erfolgt eine Ermittlung der Ist-Temperatur oder der Zuspannkraft an den Radbremsen. Dies kann insbesondere unter Berücksichtigung des zeitlichen Verlaufs dieser Parameter erfolgen. Ist diese Bedingung 130 nicht erfüllt, erfolgt Unterschritt 132. Es wird eine Feststellbremsenanforderung umgesetzt, die Bremskraft wird aufrecht erhalten, d. h. die Bremseinrichtung wird mechanisch verriegelt und ihr Status weitergeleitet. Falls die Bedingung 130 für ein Nachspannen gegeben ist (Y), erfolgt in Unterschritt 131 ein Bremskraftaufbau an der nicht mit der Feststellbremsfunktion beteiligten Achse. Desweiteren erfolgt eine Abfrage 140 darüber, ob das Fahrzeug gegen Losrollen gesichert ist, und/oder ob eine der oben genannten Nachspannbedingungen weiterhin vorliegt.

Ist dies nicht der Fall (N), reicht z. B. eine Energiebereitstellung für einen weiteren Zuspannkraftaufbau nicht aus, erfolgt ein dem Schritt S3 untergeordneter Unterschritt 142. Die Zuspannkraft kann nicht erhöht werden, was einer Abbruchbedingung für das Verfahren entspricht, es wird eine Warnung an den Fahrer abgegeben. Falls hingegen das Fahrzeug gemäß Abfrage 140 gegen Losrollen gesichert ist (Y), erfolgt ein Nachspannen der Feststellbrems-Achse. Dieser Vorgang hängt von der Ist-Temperatur und/oder der zeitlichen Änderung der Zuspannkraft ab. Es erfolgt eine Erhöhung der Zuspannkraft an der Feststellbremse oder deren Verriegelung an der damit beaufschlagten Achse.

Im vierten Schritt S4 kann das Bremssystem passiv geschaltet werden (150). Hierzu erfolgt eine Abfrage darüber, ob das Nachspannen erfolgreich abgeschlossen ist. Ist dies nicht der Fall (N), so liegt eine Abbruchbedingung (152) vor. Dem Fahrer wird signalisiert, dass ein Nachspannen nicht möglich ist. Es erfolgt ein Bremskraftaufbau an der nicht an der Feststellbremsfunktion beteiligten Achse, oder eine bereits vorhandene Bremskraft wird weiter aufrecht erhalten. Ist das Nachspannen erfolgreich (Y), erfolgt Unterschritt 151. Hierbei kommt es zu einem Bremskraftabbau an der nicht an der Feststellbremsfunktion beteiligten Achse. Der aktuelle Status des Bremssystems wird an den Fahrer weitergegeben. Die Feststellbremsennachspannung ist abgeschlossen.

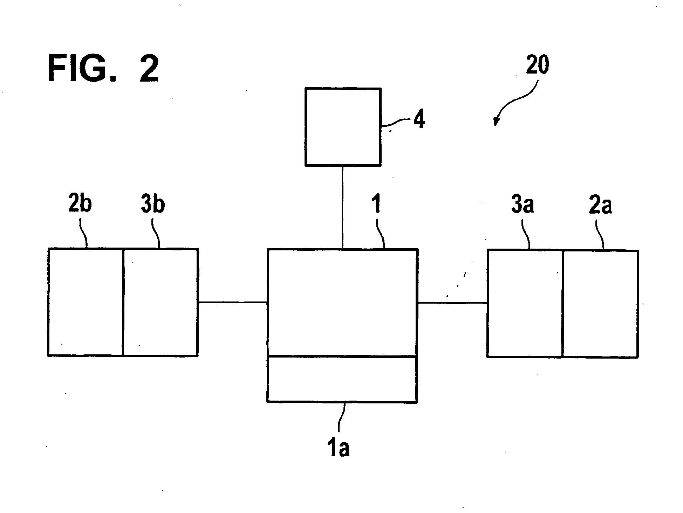

Figur 2 zeigt eine schematische Darstellung einer erfindungsgemäßen Bremskraftanlage 20. Eine Steuereinheit 1 umfasst einen Mikrocomputer 1a. Die Steuereinheit 1 ist zur Sicherstellung des Fahrzeugstillstandes oder zur Überwachung und/oder Regelung der Funktion der elektromechanischen Bremskraftanlage 20 ausgebildet. Bei vorliegendem Ausführungsbeispiel der Erfindung werden eine erste elektromechanische Bremseinrichtung 3a für eine erste Rad-Achsen-Einheit 2a und eine zweite elektromechanische Bremseinrichtung 3b für eine zweite Rad-Achsen-Einheit 2b gesteuert.

Ohne Beschränkung der Allgemeinheit umfasst die elektromechanische Bremskraftanlage 20 im vorliegenden Ausführungsbeispiel zwei Rad-Achsen-Einheiten 2a, 2b mit jeweils einer elektromechanischen Bremseinrichtung 3a, 3b. Weist ein Fahrzeug mit der erfindungsgemäßen Bremskraftanlage 20 mehr als zwei Achsen auf, kann jeder Achse eine elektromechanische Bremseinrichtung, welche von der Steuereinheit 1 gesteuert wird, zugeordnet sein. In einer anderen, analogen Ausführungsvariante der Erfindung kann vorgesehen sein, dass jedem Fahrzeugrad achsunabhängig eine elektromechanische Bremseinrichtung zugeordnet ist, welche von der Steuereinheit 1 gesteuert wird.

Mittels einer Betätigungseinrichtung 4 kann ein Fahrer eine Feststellbremsung einleiten. Ein entsprechendes Bremssignal wird über die Steuereinheit 1 an wenigstens eine der Bremseinrichtungen 3a, 3b weitergeleitet. Eine Bremseinrichtung 3a, 3b beaufschlagt die ihr zugeordnete Rad-Achsen-Einheit 2a, 2b.

Die Bremseinrichtung, auch Bremsaktuator genannt, kann unter anderem folgende Komponenten umfassen: Bremsbeläge, Bremskolben oder Bremssättel, welche beispielsweise rein mechanisch mittels einer Gewinde-Spindel beaufschlagt werden, welche von einem Elektromotor angetrieben sein kann. Während des Fahrbetriebes ist stets unumgänglich, dass zu einer nötigen Geschwindigkeitsreduzierung Bremsvorgänge vorgenommen werden. Hierbei kommt es aufgrund der damit verbundenen Reibung zur Erhitzung der vorgenannten einzelnen Komponenten einer elektromechanischen Bremseinrichtung 3a, 3b. Soll nach Beendigung des Fahrbetriebes das Fahrzeug abgestellt werden, ist es in der Regel erforderlich, eine Feststellbremse zu aktivieren. Dabei wird eine Rad-Achsen-Einheit 2a, 2b durch die zugeordnete Bremseinrichtung 3a, 3b mit einer Zuspannkraft beaufschlagt. Da die Bremseinrichtung 3a, 3b aufgrund des vorherigen Fahrbetriebes meistens noch erhitzt ist, wird die Zuspannkraft durch die Temperatur der elektromechanischen Bremseinrichtung 3a, 3b beeinflusst. In der nachfolgenden Zeit kommt es jedoch zu einer Abkühlung der Bremseinrichtung 3a, 3b, was mit einer Kontraktion des Bremsmaterials einhergeht und zu einer Reduzierung der Zuspannkraft führt, was ungünstigerweise zu einem Lösen der Feststellbremse führen kann.

Ohne Beschränkung der Allgemeinheit sei die erste elektromechanische Bremseinrichtung 3a zur Beaufschlagung der ersten Rad-Achsen-Einheit 2a zur eigentlichen Bereitstellung einer Feststellbremsfunktion ausgebildet. Mittels der Steuereinheit 1 wird die erste elektromechanische Bremseinrichtung 3a überwacht. Diese Überwachung kann unter anderem folgendes umfassen: Messung der Temperatur und/oder Erfassung der Zuspannkraft, mit welcher die erste elektromechanische Bremseinrichtung 3a die erste Rad-Achsen-Einheit 2a beaufschlagt. Unterschreitet die Temperatur während der Abkühlphase einen vorgegebenen und/oder situationsabhängig errechneten Grenzwert, oder kommt es zu einer Reduzierung der Zuspannkraft, werden durch die Steuereinheit 1 erfindungsgemäß Gegenmaßnahmen eingeleitet. Falls zur Sicherstellung des Fahrzeugstillstandes die erste elektromechanische Bremseinrichtung 3a nicht ausreicht, wird mittels der Steuereinheit 1 die zweite elektromechanische Bremseinrichtung 3b aktiviert, welche die zweite Rad-Achsen-Einheit 2b mit einer zur Sicherung des Fahrzeugstillstandes erforderlichen Zuspannkraft beaufschlagt. Erfindungsgemäß ist somit vorgesehen, dass die zweite elektromechanische Bremseinrichtung 3b, welche normalerweise nicht zur Bereitstellung einer Feststellbremsfunktion ausgebildet ist, die erste elektromechanische Bremseinrichtung 3a, welche normalerweise zur Bereitstellung einer Feststellbremsfunktion ausgebildet ist, ergänzt und/oder ersetzt.

## Patentansprüche

1. Steuereinheit für ein Fahrzeug zur Sicherstellung des Fahrzeugstillstandes bzw. der Feststellbremsfunktion an dem Fahrzeug, wobei das Fahrzeug
- eine dezentrale elektromechanische Bremskraftanlage (20) und
- eine Feststellbremse (4)
aufweist,
**dadurch gekennzeichnet,dass**
die Steuereinheit (1) in einem ersten Schritt
- den Stillstand des Fahrzeuges ermittelt und
- überprüft, ob an der Feststellbremse (4) eine zur Sicherung des Fahrzeugstillstandes ausreichende Zuspannkraft vorliegt,
wobei bei Vorliegen einer für die Sicherstellung des Fahrzeugstillstandes bzw. der Feststellbremsfunktion nicht ausreichenden Zuspannkraft an der Feststellbremse (4) den Fahrzeugstillstand bzw. die Feststellbremsfunktion mittels einer Zuspannung an einer nicht mit der Feststellbremskraft beaufschlagten elektromechanischen Bremseinrichtung (3) der Bremskraftanlage (20) erwirkt.

2. Steuereinheit nach Anspruch 1, **dadurch gekennzeichnet, dass** die Steuereinheit (1) während einer Erhöhung der Zuspannkraft der Feststellbremse (4) infolge eines Bremskraftverlustes die Zuspannung an einer nicht mit der Feststellbremskraft beaufschlagten elektromechanischen Bremseinrichtung (3) der Bremskraftanlage (20) erwirkt.

3. Steuereinheit nach Anspruch 1 oder 2, **dadurch gekennzeichnet, dass** die Steuereinheit die nicht mit der Feststellbremskraft beaufschlagte Bremseinrichtung (3) beim Vorliegen einer zur Sicherstellung des Fahrzeugs nicht ausreichenden Zuspannkraft an der Feststellbremse (4) mit einer Zuspannkraft beaufschlagt, die der zur Sicherstellung des Fahrzeugstillstandes notwendigen Zuspannkraft der Feststellbremse (4) entspricht.

4. Steuereinheit nach Anspruch 1, **dadurch gekennzeichnet, dass** in einem zweiten Schritt die Zuspannung an einer nicht mit der Feststellbremskraft beaufschlagten Bremseinrichtung (3) erfolgt, wenn ein Fahrzeugstillstand ermittelt worden ist und an der Feststellbremse (4) eine zur Sicherstellung des Fahrzeugstillstandes nicht ausreichende Zuspannkraft vorliegt und/oder eine an der Feststellbremse (4) gemessene Temperatur einen vorgegebenen Grenzwert überschreitet.

5. Steuereinheit nach Anspruch 4, **dadurch gekennzeichnet, dass** in einem dritten Schritt die Zuspannung der mit der Feststellbremskraft beaufschlagten Bremseinrichtung (4) erhöht wird, bis eine zur Sicherstellung des Fahrzeugstillstandes ausreichende Zuspannkraft an dieser erreicht ist und/oder die an der Feststellbremse (4) gemessene Temperatur den vorgegebenen Grenzwert unterschreitet.

6. Steuereinheit nach Anspruch 5, **dadurch gekennzeichnet, dass** in einem vierten Schritt nach Erreichen einer zur Sicherstellung des Fahrzeugstillstandes ausreichenden Zuspannkraft an der Feststellbremse (4) und/oder nach Unterschreiten des vorgegebenen Temperaturgrenzwerts an der Feststellbremse (4) die Zuspannung an der nicht mit der Feststellbremskraft beaufschlagten Bremseinrichtung (3) gelöst wird.

7. Steuereinheit nach Anspruch 5, **dadurch gekennzeichnet, dass** bei Nichterreichung einer zur Sicherstellung des Fahrzeugstillstandes ausreichenden Zuspannkraft an der Feststellbremse (4) die Zuspannung an der nicht mit der Feststellbremskraft beaufschlagten Bremseinrichtung (3) erst dann gelöst wird, wenn eine zur Sicherstellung des Fahrzeugs ausreichende Zuspannung an der Betriebsbremse (4) des Fahrzeugs vorliegt oder der Fahrzeugmotor oder die Getriebestellung eine ausreichende Kraft aufbringt, um einer unerwünschten Bewegung des Fahrzeugs entgegenzuwirken.

8. Steuereinheit nach einem der vorherigen Ansprüche, **dadurch gekennzeichnet, dass** die Steuereinheit zur Sicherstellung der Zuspannung der Feststellbremse (4) und/oder einer nicht mit der Feststellbremskraft beaufschlagten Bremseinrichtung (3) die Bremsbeläge der Bremsen (3, 4) durch Elektromotoren und Bewegungsgetriebe an die entsprechenden Bremsscheiben presst.

9. Steuereinheit nach Anspruch 4 bis 6, **dadurch gekennzeichnet, dass** die Temperatur der Feststellbremse (4) an den Bremsbelägen und/oder an den Bremsscheiben der Feststellbremse (4) gemessen werden.

10. Microcomputer (1a) mit einer Steuereinheit nach einem der Ansprüche 1 bis 9, **dadurch gekennzeichnet, dass** der Microcomputer die Bremsen (3, 4) steuert.

## Claims

1. Control unit for a vehicle for ensuring the vehicle is in a stationary state and/or for ensuring the parking brake function on the vehicle, wherein the vehicle has
- a decentralized electromechanical brake system (20) and
- a parking brake (4),
**characterized in that** in a first step the control unit (1)
- determines the stationary state of the vehicle and
- checks whether a sufficient brake application force to ensure the stationary state of the vehicle is present at the parking brake (4),
wherein, when an insufficient brake application force to ensure the stationary state of the vehicle or to ensure the parking brake function is present at the parking brake (4), the stationary state of the vehicle and/or the parking brake function is brought about by application of an electromechanical brake device (3), to which the parking brake force is not applied, of the brake system (20).

2. Control unit according to Claim 1, **characterized in that**, during an increase in the brake application force of the parking brake (4) owing to a loss of braking force, the control unit (1) brings about the application of an electromechanical brake device (3), to which the parking brake force is not applied, of the brake system (20).

3. Control unit according to Claim 1 or 2,
**characterized in that** when the brake application force at the parking brake (4) is not sufficient to secure the vehicle, the brake device (3) to which the parking brake force is not applied has applied to it, by the control unit, a brake application force which corresponds to that brake application force of the parking brake (4) which is necessary to ensure the stationary state of the vehicle.

4. Control unit according to Claim 1, **characterized in that**, in a second step, a brake device (3) to which the parking brake force is not applied is applied if a stationary state of the vehicle has been determined and a brake application force which is not sufficient to ensure the stationary state of the vehicle is present at the parking brake (4) and/or a temperature which is measured at the parking brake (4) exceeds a predefined limiting value.

5. Control unit according to Claim 4, **characterized in that**, in a third step, the application of the brake device (4) to which the parking brake force is applied is increased until a brake application force which is sufficient to ensure the stationary state of the vehicle is achieved at said brake device (4) and/or the temperature which is measured at the parking brake (4) is less than the predefined limiting value.

6. Control unit according to Claim 5, **characterized in that**, in a fourth step after a brake application force which is sufficient to ensure the stationary state of the vehicle has been achieved at the parking brake (4) and/or the temperature is lower than the predefined temperature limiting value at the parking brake (4), the application of the brake device (3) to which the parking brake force is not applied is triggered.

7. Control unit according to Claim 5, **characterized in that** if a brake application force which is sufficient to ensure the stationary state of the vehicle is not attained at the parking brake (4), the application of the brake device (3) to which the parking brake force is not applied is not triggered until the service brake (4) of the vehicle is applied to a degree which is sufficient to secure the vehicle or the engine of the vehicle or the position of the gearbox applies sufficient force to counteract an undesired movement of the vehicle.

8. Control unit according to one of the preceding claims, **characterized in that**, in order to ensure the application of the parking brake (4) and/or of a brake device (3) to which the parking brake force is not applied, the control unit presses the brake linings of the brakes (3, 4) against the corresponding brake discs by means of electric motors and movement gears.

9. Control unit according to Claims 4 to 6,
**characterized in that** the temperature of the parking brake (4) is measured at the brake linings and/or at the brake discs of the parking brake (4).

10. Microcomputer (1a) having a control unit as claimed in one of Claims 1 to 9, **characterized in that** the microcomputer controls the brakes (3, 4).

## Revendications

1. Unité de commande d'un véhicule pour assurer l'état d'immobilisation du véhicule ou la fonction de frein de stationnement du véhicule,
le véhicule comprenant :
- une installation de commande électromécanique décentralisée de frein (20), et
- un frein de stationnement (4),
**caractérisée en ce que**
dans une première étape, l'unité de commande (1),
- détermine l'arrêt du véhicule, et
- vérifie si une force de serrage suffisante est appliquée au frein de stationnement (4) pour assurer l'immobilisation du véhicule,
et en cas d'une force de serrage insuffisante pour assurer l'immobilisation du véhicule ou la fonction de frein de stationnement, appliquée au frein de stationnement (4), on assure l'immobilisation du véhicule ou la fonction de frein de stationnement à l'aide d'une tension de serrage appliquée à une installation de frein électromécanique (3) de l'installation d'actionnement de frein (20), qui n'est pas sollicitée par la force de frein de stationnement.

2. Unité de commande selon la revendication 1,
**caractérisée en ce qu'**
au cours d'une augmentation de la force de serrage du frein de stationnement (4), par suite d'une perte de force de freinage, la tension de serrage de l'unité de commande (1) agit sur une installation de frein électromécanique (3) de l'installation de frein (20) qui n'est pas sollicitée par la force du frein de stationnement.

3. Unité de commande selon la revendication 1 ou 2,
**caractérisée en ce que**
l'unité de commande sollicite l'installation de frein (3) non sollicitée par la force de frein de stationnement, en cas d'une force de serrage insuffisante pour assurer le véhicule du frein de stationnement (4) avec une force de serrage qui correspond à la force de serrage du frein de stationnement (4) nécessaire pour assurer l'immobilisation du véhicule.

4. Unité de commande selon la revendication 1,
**caractérisée en ce que**
dans une seconde étape, la force de serrage est obtenue par l'installation de frein (3) non sollicitée par la force de frein de stationnement si l'arrêt du véhicule a été déterminé et si le frein de stationnement (4) n'a pas de force de serrage suffisante pour garantir l'immobilisation du véhicule et/ou si la température mesurée sur le frein de stationnement (4) dépasse une valeur limite prédéfinie.

5. Unité de commande selon la revendication 4,
**caractérisée en ce que**
dans une troisième étape, on augmente la force de serrage de l'installation de frein (4) sollicitée par la force de frein de stationnement jusqu'à ce que sur celle-ci on a une force de serrage suffisante pour garantir l'immobilisation du véhicule et/ou si la température mesurée sur le frein de stationnement (4) passe en dessous de la valeur limite prédéfinie.

6. Unité de commande selon la revendication 5,
**caractérisée en ce que**
dans une quatrième étape, après avoir atteint une force de serrage du frein de stationnement (4) suffisante pour garantir l'immobilisation du véhicule et/ou après dépassement vers le bas de la valeur limite prédéfinie de la température sur le frein de stationnement (4), on déclenche la force de serrage appliquée à l'installation de frein (3), non sollicitée par la force de frein de stationnement.

7. Unité de commande selon la revendication 5,
**caractérisée en ce que**
lorsqu'on n'atteint pas une force de serrage sur le frein de stationnement (4), suffisante pour garantir l'immobilisation du véhicule, la force de serrage appliquée à l'installation de frein (3) non sollicitée par la force du frein de stationnement, ne sera augmentée que si une tension de serrage suffisante pour garantir le véhicule, est appliquée au frein de service (4) du véhicule ou si le moteur du véhicule ou la position de la boîte de vitesses applique une force suffisante pour s'opposer à un mouvement non voulu du véhicule.

8. Unité de commande selon l'une des revendications précédentes,
**caractérisée en ce que**
pour garantir la force de serrage du frein de stationnement (4) et/ou d'une installation de frein (3) non sollicitée par la force de frein de stationnement, l'unité de commande presse les garnitures des freins (3, 4) à l'aide de moteurs électriques et de transmissions contre les disques de frein correspondants.

9. Unité de commande selon les revendications 4 à 6,
**caractérisée en ce qu'**
on mesure la température du frein de stationnement (4) au niveau des garnitures de frein et/ou des disques des freins de stationnement (4).

10. Micro-ordinateur (1a) comportant une unité de commande selon l'une des revendications 1 à 9,
**caractérisé en ce que**
le micro-ordinateur commande les freins (3, 4).
